# EUROPÄISCHE PATENTANMELDUNG

(11) **EP 2 826 611 A1**
(43) Veröffentlichungstag der Anmeldung: **21.01.2015**
(21) Anmeldenummer: 13177002.6
(22) Anmeldetag: 18.07.2013
(51) Int. Cl.: B29C 44/12, B29C 33/68, B29C 44/14, B65B 3/00

(54) **Verfahren zur Herstellung von Schaumformteilen in einer Verpackungshülle und Verkaufseinheit**

(71) Anmelder: HILTI Aktiengesellschaft, 9494 Schaan (LI)
(72) Erfinder: Münzenberger, Herbert, 65191 Wiesbaden (DE); Paetow, Mario, 86859 Igling (DE); Ober, Andreas, 86916 Kaufering (DE)
(74) Vertreter: Hilti Aktiengesellschaft Corporate Intellectual Property

(57) **Zusammenfassung**

Ein Verfahren zur Herstellung von Schaumformteilen (16) für den Hoch- oder Tiefbau weist die folgenden Schritte auf: Einlegen einer Verpackungshülle (18) des herzustellenden Schaumformteils (16) in ein Formwerkzeug (10), Einfüllen eines fließfähigen Schäummaterials (24) in die Verpackungshülle (18) innerhalb des Formwerkzeugs (10), Ausschäumen des vom Formwerkzeug (10) und der Verpackungshülle (18) definierten Hohlraums, und Entnehmen des erzeugten Schaumformteils (16) samt seiner Verpackungshülle (18).

## Beschreibung

Die Erfindung betrifft ein Verfahren zur Herstellung von Schaumformteilen für den Hoch- oder Tiefbau sowie eine Verkaufseinheit für ein Schaumformteil.

Schaumstoffformteile für den Hoch- oder Tiefbau werden üblicherweise im RIM-Verfahren hergestellt. Dabei wird ein fließfähiges Material in ein Formwerkzeug gegeben, in dem es ausreagiert und einen Hohlraum im Formwerkzeug vollständig ausschäumt. Jedoch haftet der ausreagierte Schaumstoff an der Oberfläche des Formwerkzeugs, weshalb Maßnahmen getroffen werden, um dieses Anhaften auszuschließen.

Es sind verschiedene Vorgehensweisen bekannt, um das Anhaften des Schaumstoffs am Formwerkzeug zu verhindern und das Entformen zu vereinfachen. Beispielsweise kann vor jedem Schäumvorgang ein Trennmittel eingesprüht werden, was aber nach 10 bis 15 Schäumvorgängen eine Grundreinigung des Formwerkzeugs erforderlich macht.

Eine Alternative stellt ein beschichtetes Formwerkzeug dar, jedoch muss die Beschichtung nach 100 bis 150 Schäumvorgängen erneuert werden. Dies ist teuer und verändert zudem die Maßhaltigkeit des Formwerkzeugs.

Ebenfalls üblich sind Einleger für das Formwerkzeug aus Silikon oder Polyolefinen, welche aber auch nur eine begrenzte Lebensdauer von ca. 50 bis 100 Schäumvorgängen haben.

Schließlich ist eine Verwendung von Trennfolien möglich, die allerdings zur Faltenbildung neigen, sodass sie nur auf glatten Flächen Verwendung finden.

Es ist Aufgabe der Erfindung, ein Verfahren zur Herstellung von Schaumformteilen bereitzustellen, das sowohl preisgünstig ist als auch keine Unterbrechung des Produktionsprozesses nach einer bestimmten Anzahl von Schäumvorgängen mit sich bringt.

Diese Aufgabe wird gelöst durch ein Verfahren zur Herstellung von Schaumformteilen für den Hoch- oder Tiefbau mit den folgenden Schritten:
- Einlegen einer Verpackungshülle des herzustellenden Schaumformteils in ein Formwerkzeug,
- Einfüllen eines fließfähigen Schäummaterials in die Verpackungshülle innerhalb des Formwerkzeugs,
- Ausschäumen des vom Formwerkzeug und der Verpackungshülle definierten Hohlraums, und
- Entnehmen des erzeugten Schaumformteils samt seiner Verpackungshülle.

Der Erfindung liegt die Erkenntnis zugrunde, dass die Verpackungshülle dazu benutzt werden kann, ein Anhaften des Schäummaterials am Formwerkzeug zu verhindern. Dies wird dadurch erreicht, dass das Schaumformteil in der Verpackungshülle, die zuvor in das Formwerkzeug eingelegt wurde, ausreagiert. Dadurch wird direkter Kontakt zwischen dem Schäummaterial und dem Formwerkzeug vermieden, sodass das Schäummaterial nicht am Formwerkzeug anhaften kann. Zudem ist das Verfahren kostengünstig, da keine Trennmittel, Beschichtungen oder Einleger benötigt werden, die zusätzliche Kosten verursachen. Ferner ist das anschließende Verpacken des Formteils nicht mehr nötig.

Vorzugsweise umgibt die Verpackungshülle das Schaumformteil vollständig, wodurch jeglicher Kontakt zwischen dem Schäummaterial und dem Formwerkzeug zuverlässig vermieden wird.

In einer Ausführungsvariante ist die Verpackungshülle mehrteilig, insbesondere zweiteilig ausgebildet. Ein Oberteil der Verpackungshülle wird in einem Werkzeugoberteil des Formwerkzeugs eingelegt, und ein Unterteil der Verpackungshülle wird in einem Werkzeugunterteil des Formwerkzeugs eingelegt. Dadurch wird auf einfache Weise erreicht, dass sowohl das Werkzeugoberteil als auch das Werkzeugunterteil vor einen Anhaften des Schäummaterials geschützt sind.

Das Oberteil und das Unterteil der Verpackungshülle können beim Schließen des Formwerkzeugs aneinander befestigt werden, insbesondere durch Erhitzen, wodurch auf einfache Weise eine sicher verschlossene Verpackungshülle realisiert wird.

Beispielsweise wird die Verpackungshülle vom Formwerkzeug geschlossen, sodass kein zusätzlicher Verfahrensschritt zum Verschließen der Verpackungshülle notwendig ist.

In einer Ausgestaltung der Erfindung ist das fließfähige Schäummaterial eine Reaktionsmasse, die wenigstens zwei Komponenten enthält, sodass die beiden Komponenten im Formwerkzeug zu einem Schaum ausreagieren können.

Vorzugsweise reagiert die Reaktionsmasse zu Polyurethanschaum, da Polyurethanschaum ein weit verbreiteter Werkstoff im Hoch- oder Tiefbau ist.

In einer Ausführungsvariante besteht das fließfähige Schäummaterial aus einem schäumbaren Bindemittel, das ein intumeszierendes Stoffgemisch enthält. Das Bindemittel dient dabei als verbundbildender Träger für das intumeszierende Stoffgemisch. Bevorzugt ist das Stoffgemisch homogen in dem Bindemittel verteilt. Der verbundbildenden Träger ist bevorzugt aus der Gruppe ausgewählt, bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Cellulose, Elastomeren und Gemischen davon, wobei Polyurethane bevorzugt sind.

Das aschebildende und gegebenenfalls intumeszierende Stoffgemisch umfasst die üblichen und dem Fachmann bekannten Brandschutzadditive, welche im Brandfall, also unter Hitzeeinwirkung aufschäumen und dabei einen die Flammenausbreitung hindernden Schaum ausbilden, wie ein intumeszierendes Material auf der Grundlage eines Säurebildners, einer Kohlenstoff liefernden Verbindung und eines Gasbildners. Bevorzugt umfasst das intumeszierende Material als Säurebildner, ein Salz oder ein Ester einer anorganischen, nichtflüchtigen Säure ausgewählt aus Schwefelsäure, Phosphorsäure und Borsäure, als Kohlenstoff liefernde Verbindung eine Poly-hydroxyverbindung und/oder ein thermoplastisches oder duroplastisches polymeres Harzbindemittel und als Gasbildner ein Chlorparaffin, Melamin, eine Melaminverbin-dung, insbesondere Melamincyanurat, Melaminphosphat, Melaminpolyphosphat, Tris(hydroxyethyl)cyanurat, Cyanamid, Dicyanamid, Dicyandiamid, Biguanidin und/oder ein Guanidinsalz, insbesondere Guanidinphosphat oder Guanidinsulfat.

Der verbundbildende Träger kann ferner als ablatives Additiv, eine anorganische Verbindung, die Wasser, z.B. als Kristallwasser, fest eingelagert hat und bei Temperaturen bis 100°C nicht austrocknet, dieses aber im Brandfall ab 120°C freisetzt und dadurch temperaturführende Teile kühlen kann, enthalten, bevorzugt ein bei der Brandtemperatur bzw. bei Beflammung wasserabgebendes anorganisches Hydroxid oder Hydrat, insbesondere Aluminiumhydroxid, Aluminiumoxidhydrate oder teilhydratisierte Aluminiumhydroxide. Es kommen aber auch andere, bei der Beflammung wasserabgebende anorganische Hydroxide oder Hydrate in Betracht, wie sie in der EP 0 274 068 A2 beschrieben sind.

Derartige Verbindungen, die als Stoffgemisch in der erfindungsgemäßen Brandschutz-Einlage eingesetzt werden können, sind dem Fachmann bekannt und beispielsweise in den folgenden Druckschriften offenbart, auf die hiermit ausdrücklich Bezug genommen sei: DE 30 25 309 A1, DE 30 41 731 A1, DE 33 02 416 A1, DE 34 11 327 A1, EP 0 043 952 B1, EP 0 051 106 B1, EP 0 061 024 B1, EP 0116846 B1, EP 0158165 B1, EP 0 274 068 A2, EP 1 347 549 A1, EP 1 641 895 B1 und DE 196 53 503 A1.

Materialien, die für erfindungsgemäße Zwecke eingesetzt werden können, sind aus EP 0061024 A1, EP 0051106 A1, EP 0043952 A1, EP 0158165 A1, EP 0116846 A1 und US 3,396,129 A sowie EP 1347549 A1 bekannt. Bevorzugt besteht der Formkörper aus einem intumeszenzfähigen Polyurethanschaum, wie er aus der EP 0061024 A1, DE 3025309 A1, DE 3041731 A1, DE 3302416 A und DE 3411 327 A1 bekannt ist.

In einer weiteren Ausführungsform ist die Verpackungshülle ein Kunststoffformteil, insbesondere eine Blisterverpackung, da Kunststoffformteile kostengünstig herzustellen sind.

Beispielsweise ist die Verpackungshülle eigensteif und vorzugsweise der Oberflächengeometrie des Formwerkzeugs angepasst, sodass die Verpackungshülle zur Formgebung des Schaumformteils herangezogen werden kann.

In einer weiteren Ausführungsvariante ist die Verpackungshülle eine flexible, d. h. nicht eigensteife, ebene Folie. Dadurch ist eine besonders kostengünstige Form der Verpackungshülle gewählt.

Vorzugsweise ist die Folie derart flexibel, dass sie sich an detaillierte Konturen des Formwerkzeugs vollständig anpassen kann und die Formgebung des Schaumformteils nicht durch die Verpackungshülle beeinflusst wird.

In einer weiteren Ausführungsform stellt die Verpackungshülle die Verkaufsverpackung dar, sodass die Kosten für eine Verkaufsverpackung sowie das Verpacken der Schaumformteile eingespart werden.

Die Erfindung betrifft ferner eine Verkaufseinheit, die ein nach dem erfindungsgemäßen Verfahren hergestelltes Schaumformteil und eine bei der Herstellung mit verwendete Verpackungshülle aufweist.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1: ein Formwerkzeug zur Durchführung des erfindungsgemäßen Verfahrens mit eingelegter Verpackungshülle und eingefülltem Schäummaterial im Schnitt,
- Figur 2: das Schäumwerkzeug aus Figur 1 in geschlossener Stellung mit ausreagiertem Schäummaterial im Schnitt, und
- Figur 3: das aus dem Formwerkzeug nach Figur 2 ausgelöste Schaumformteil mit seiner Verpackungshülle im Schnitt.

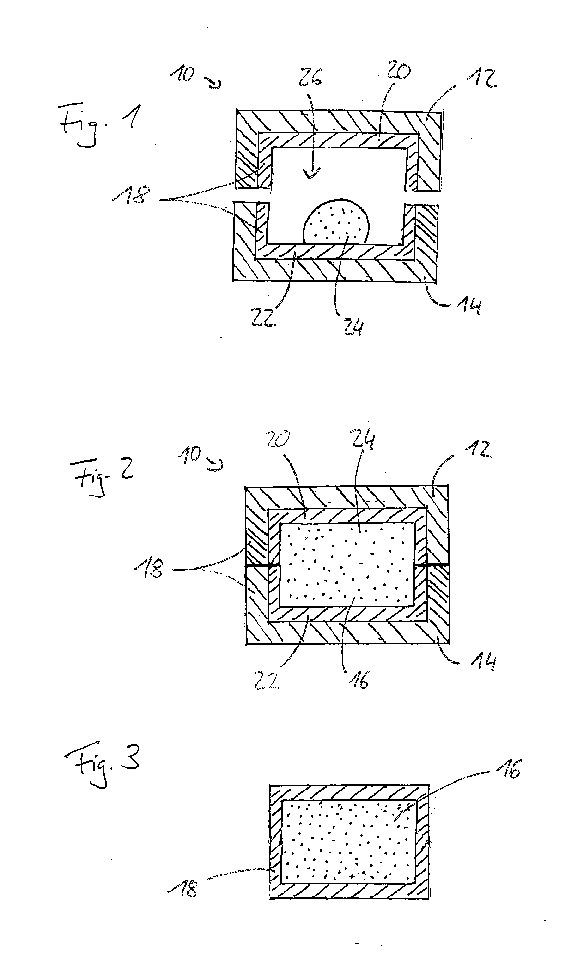

In Figur 1 ist ein Formwerkzeug 10 schematisch im Schnitt dargestellt, welches ein Werkzeugoberteil 12 und ein Werkzeugunterteil 14 aufweist. Das Werkzeugoberteil 12 sowie das Werkzeugunterteil 14 sind quaderförmig und in ihnen ist jeweils eine Formausnehmung ausgebildet. Die Formausnehmungen entsprechen zusammengenommen einer Negativform des herzustellenden Schaumformteils 16 (Fig. 3). Obwohl hier nur schematisch dargestellt, können die Formausnehmungen detaillierte Konturen aufweisen, die eine detailreiche Form des Schaumformteils 16 ermöglichen.

Im Formwerkzeug 10 ist eine zweiteilige Verpackungshülle 18 angeordnet, die ein Oberteil 20 und ein Unterteil 22 aufweist. Das Oberteil 20 ist in der Formausnehmung des Werkzeugoberteils 12 angeordnet und kann die Oberfläche der Formausnehmung vollständig bedecken. Gleichermaßen ist das Unterteil 22 der Verpackungshülle 18 im Werkzeugunterteil 14 des Formwerkzeugs 10 angeordnet und kann ebenfalls die gesamte Oberfläche der Formausnehmung abdecken.

Die Verpackungshülle 18 ist beispielsweise eine flexible, ebene Folie, die sich an die detaillierten Konturen der Formausnehmungen des Formwerkzeugs 10 anpassen kann.

Die Verpackungshülle 18 kann auch ein Kunststoffformteil, insbesondere eine Blisterverpackung sein, die eine Eigensteifigkeit aufweist. Das Kunststoffformteil kann ebenfalls detaillierte Konturen aufweisen, um das Schaumformteil 16 zu formen. Zudem ist die Oberflächengeometrie des Kunststoffformteils als Verpackungshülle 18 an die Oberflächengeometrie des Formwerkzeugs 10 angepasst.

Zur Herstellung des Schaumformteils 16 wird zunächst die Verpackungshülle 18 in das Formwerkzeug 10 eingelegt.

Anschließend wird ein fließfähiges Schäummaterial 24 in die Verpackungshülle 18 in dem geöffneten Formwerkzeug 10 eingefüllt. Das geöffnete Formwerkzeug 10 mit eingefülltem fließfähigem Schäummaterial 24 ist in Figur 1 dargestellt.

Das Schäummaterial 24 ist eine Reaktionsmasse, die wenigstens zwei Komponenten enthält und beispielsweise zu Polyurethanschaum reagiert.

Nach dem Einfüllen des Schäummaterials 24 wird das Formwerkzeug 10 geschlossen, wodurch gleichzeitig die Verpackungshülle 18 mit geschlossen wird. Die Formausnehmungen des Formwerkzeugs 10 und die darin angeordnete Verpackungshülle 18 definieren somit einen Hohlraum 26, in dem sich das Schäummaterial 24 befindet.

Das Schäummaterial 24 reagiert nun aus, wobei die beiden Komponenten des Schäummaterials 24 miteinander reagieren, sodass unter starker Volumenzunahme ein Schaum gebildet wird. Dabei füllt das Schäummaterial 24 den gesamten Hohlraum 26 aus und erzeugt auf diese Weise das Schaumformteil 16. Das geschlossene Formwerkzeug 10 mit ausgeschäumtem Schäummaterial 24 ist in Figur 2 dargestellt.

Bei geschlossenem Formwerkzeug 10 kann, beispielsweise durch Erhitzen des Formwerkzeugs 10, das Oberteil 20 mit dem Unterteil 22 der Verpackungshülle befestigt werden. Dadurch wird die Verpackungshülle 18 sicher verschlossen (Fig. 3).

Nach vollständigem Ausschäumen und Ausreagieren des Schäum-materials 24 unter Erzeugung des Schaumformteils 16 kann das Schaumformteil 16 aus dem Formwerkzeug 10 mitsamt der Verpackungshülle 18 entformt werden. Das Schaumformteil 16 haftet nicht am Formwerkzeug 10, da das Schäummaterial 24 nicht in Kontakt mit Formwerkzeug 10 gekommen ist. Deswegen ist ein Entformen ohne Beschädigung des Schaumformteils 16 oder Verschmutzen des Formwerkzeugs 10 möglich, sodass keine Nachbearbeitung am Schaumformteil 16 oder dem Formwerkzeug 10 nötig wird.

In Figur 3 ist die erzeugte Verkaufseinheit, d.h. das entformte Schaumformteil 16 in seiner Verpackungshülle 18, im Schnitt gezeigt. Die Verpackungshülle 18 umgibt das Schaumformteil 16 vollständig.

Außerdem kann die Verpackungshülle 18 bereits die Verkaufsverpackung darstellen.

Selbstverständlich ist das Verfahren nicht auf die hier dargestellte Form des Schaumformteils 16 beschränkt. So sind beliebig andere, durch Schäumen herstellbare Formen des Schaumformteils 16 ebenfalls denkbar. Auch wurden Details des Formwerkzeugs 10, wie beispielsweise Entlüftungsmittel, nicht gezeigt, jedoch weiß ein Fachmann um die genaue Ausgestaltung eines Formwerkzeugs zum Schäumen von Schaumformteilen.

## Patentansprüche

1. Verfahren zur Herstellung von Schaumformteilen (16) für den Hoch- oder Tiefbau mit den folgenden Schritten:
- Einlegen einer Verpackungshülle (18) des herzustellenden Schaumformteils (16) in ein Formwerkzeug (10),
- Einfüllen eines fließfähigen Schäummaterials (24) in die Verpackungshülle (18) innerhalb des Formwerkzeugs (10),
- Ausschäumen des vom Formwerkzeug (10) und der Verpackungshülle (18) definierten Hohlraums (26), und
- Entnehmen des erzeugten Schaumformteils (16) samt seiner Verpackungshülle (18).

2. Verfahren nach Anspruch 1, **dadurch gekennzeichnet, dass** die Verpackungshülle (18) das Schaumformteil (16) vollständig umgibt.

3. Verfahren nach Anspruch 1 oder 2, **dadurch gekennzeichnet, dass** die Verpackungshülle (18) mehrteilig, insbesondere zweiteilig ausgebildet ist und ein Oberteil (20) der Verpackungshülle (18) in einem Werkzeugoberteil (12) des Formwerkzeugs (10) und ein Unterteil (22) der Verpackungshülle (18) in einem Werkzeugunterteil (14) des Formwerkzeugs (10) eingelegt werden.

4. Verfahren nach Anspruch 3, **dadurch gekennzeichnet, dass** das Oberteil (20) und das Unterteil (22) der Verpackungshülle (18) beim Schließen des Formwerkzeugs (10) aneinander befestigt werden, insbesondere durch Erhitzen.

5. Verfahren nach einem der vorhergehenden Ansprüche, **dadurch gekennzeichnet, dass** die Verpackungshülle (18) vom Formwerkzeug (10) geschlossen wird.

6. Verfahren nach einem der vorhergehenden Ansprüche, **dadurch gekennzeichnet, dass** das fließfähige Schäummaterial (24) eine Reaktionsmasse ist, die wenigstens zwei Komponenten enthält.

7. Verfahren nach Anspruch 6, **dadurch gekennzeichnet, dass** die Reaktionsmasse aus einem schäumbaren Bindemittel, das ein intumeszierendes Stoffgemisch enthält besteht.

8. Verfahren nach einem der vorhergehenden Ansprüche, **dadurch gekennzeichnet, dass** die Verpackungshülle (18) ein Kunststoffformteil, insbesondere eine Blisterverpackung ist.

9. Verfahren nach Anspruch 8, **dadurch gekennzeichnet, dass** die Verpackungshülle (18) eigensteif ist und vorzugsweise der Oberflächengeometrie des Formwerkzeugs (10) angepasst ist.

10. Verfahren nach einem der vorhergehenden Ansprüche, **dadurch gekennzeichnet, dass** die Verpackungshülle (18) eine flexible, ebene Folie ist.

11. Verfahren nach Anspruch 10, **dadurch gekennzeichnet, dass** die Folie derart flexibel ist, dass sie sich an die Konturen des Formwerkzeugs (10) vollständig anpassen kann.

12. Verfahren nach einem der vorhergehenden Ansprüche, **dadurch gekennzeichnet, dass** die Verpackungshülle (18) die Verkaufsverpackung darstellt.

13. Verkaufseinheit mit einem Schaumformteil und einer Verpackungshülle, hergestellt nach einem der vorhergehenden Ansprüchen.
